# EUROPEAN PATENT APPLICATION

(11) **EP 3 715 194 A1**
(43) Date of publication of application: **30.09.2020**
(21) Application number: 18880459.5
(22) Date of filing: 19.11.2018
(51) Int. Cl.: B60S 5/06

(54) **DRIFTING ABUTTING CONNECTION DEVICE, BATTERY REPLACING ROBOT, AND LOCKING, UNLOCKING AND LOCKING-UNLOCKING METHODS**

(30) Priority: 22.11.2017 CN 201711171351
(71) Applicant: NIO Nextev Limited, Central, Hong Kong (HK)
(72) Inventor: ZHOU, Xiaohong, Shanghai 201804 (CN); ZHAO, Zhiling, Shanghai 201804 (CN); YANG, Chao, Shanghai 201804 (CN)
(74) Representative: Vossius & Partner Patentanwälte Rechtsanwälte mbB
(86) International application number: PCT/CN2018/116131
(87) International publication number: WO 2019/101028

(57) **Abstract**

Provided are a floating joining device (1), a battery swap robot, and locking, unlocking and locking/unlocking methods, which solve the problems of low precision and poor stability in battery swapping of current battery swap robots. For this purpose, the floating joining device (1) comprises a base (11) and a floating portion (12), the floating portion (12) being configured to be floatable relative to the base (11), and the floating portion (12) being provided with at least one first positioning mechanism (123) and at least one second positioning mechanism (124), wherein the first positioning mechanism (123) is configured to be able to achieve joining with a vehicle body of a vehicle to be serviced by means of floating of the floating portion (12), and the second positioning mechanism (124) is configured to be able to achieve joining with a traction battery of the vehicle to be serviced by means of floating of the floating portion (12). Through the arrangement of the first positioning mechanism (123) and the second positioning mechanism (124), precise positioning of the floating joining device (1) and the vehicle to be serviced can be achieved when a used battery is unloaded and a fresh battery is loaded, thus improving the positioning precision and battery swap stability of the battery swap robot.

## Description

### Technical Field

The invention relates to the field of battery charging and swapping, and in particular to a floating joining device, a battery swap robot and locking, unlocking and locking/unlocking methods.

### Background Art

With the popularization of new energy automobiles, how to effectively provide rapid and effective energy supply for vehicles with insufficient energy has become a concerned problem for manufacturers and vehicle owners. Taking electric vehicles as an example, the current mainstream electric energy supply solutions include a charging solution and a battery replacement solution. Compared with the charging solution, the battery replacement solution can replace a traction battery in a very short time and does not significantly affect the service life of the traction battery, and is therefore one of the main development directions of electric energy supply. The battery replacement solution is generally completed in a battery charging and swapping station. The battery charging and swapping station is provided with a battery compartment for storing batteries, a battery swap platform, and a battery swap robot, such as a rail guided vehicle (RGV), for carrying fresh/used traction batteries to and from the battery compartment and the battery swap platform. The battery swap robot completes the action of replacing the traction battery for the electric vehicle parked on the battery swap platform by reciprocating on track rails laid in advance between the battery compartment and the battery swap platform.

During battery swapping, the positioning between the battery swap robot and a vehicle to be serviced is one of the key steps to realize the battery swap solution. The success rate and the precision of the positioning directly affect the success rate of battery swapping and the reliability and service life of the battery. In order to reduce the positioning error and improve the positioning efficiency, there is a solution in which a battery swap robot is provided with a floating platform and a position fixing device (such as an air cylinder). When the battery swap robot is aligned with a traction battery by means of floating of the floating platform, the position fixing device presses against the floating platform and thus the floating platform is fixed relative to the battery swap robot under the action of a friction force, i.e. the position where the used traction battery is unloaded is recorded. In this way, when a fresh battery is to be loaded, the loading can be performed directly according to the recorded position without re-positioning. Although the above arrangement method improves the efficiency of positioning to a certain extent, there are still some problems in actual application. First of all, there is a great chance that the floating platform will displace due to insufficient friction during the walking and lifting process of the battery swap robot, leading to a deviation from the recorded position, and therefore, a loading failure or battery damage and other problems may occur due to the deviation during the loading of the fresh battery, affecting the battery swap stability. Secondly, if there is a deviation in the loading position of the used battery itself, there will also be a deviation in the loading position of the fresh battery when the recorded position is used to load the fresh battery, which tends to cause damage to the battery and mounting structures of the vehicle body, leaving potential safety hazards. That is to say, there are problems of low precision and poor stability in battery swapping of current battery swap robots.

Accordingly, there is a need in the art for a new floating joining device to solve the above-mentioned problems.

### Summary of the Invention

In order to solve the above problems in the prior art, that is, to solve the problems of low precision and poor stability in battery swapping of current battery swap robots, the invention provides a floating joining device comprising a base and a floating portion, the floating portion being configured to be floatable relative to the base, and the floating portion being provided with at least one first positioning mechanism and at least one second positioning mechanism, wherein the first positioning mechanism is configured to be able to achieve joining with a vehicle body of a vehicle to be serviced by means of floating of the floating portion, and the second positioning mechanism is configured to be able to achieve joining with a traction battery of the vehicle to be serviced by means of floating of the floating portion.

In a preferred technical solution of the above floating joining device, the floating portion comprises at least one floating plate and a floating platform connected to the at least one floating plate, and the at least one first positioning mechanism and the at least one second positioning mechanism are both arranged on the floating platform.

In a preferred technical solution of the above floating joining device, the first positioning mechanism comprises a driving unit and a positioning unit, and the driving unit is configured to be able to drive the positioning unit to move.

In a preferred technical solution of the above floating joining device, the driving unit is an electric cylinder, an air cylinder or a lead-screw stepper motor; and/or the positioning unit is a first positioning pin.

In a preferred technical solution of the above floating joining device, the second positioning mechanism is a second positioning pin which is fixedly connected to the floating platform.

In a preferred technical solution of the above floating joining device, the floating portion comprises a plurality of floating plates, and each of the floating plates is provided with a plurality of first limiting members configured to allow the floating plate to float in a horizontal plane.

In a preferred technical solution of the above floating joining device, the first limiting member is a bullseye bearing provided at the base, and the floating plate abuts against the bullseye bearing.

In a preferred technical solution of the above floating joining device, each of the floating plates is further provided with at least one second limiting member, and the second limiting member is configured such that the floating plate is unable to move relative to the base in a vertical direction.

In a preferred technical solution of the above floating joining device, each of the floating plates is provided with a plurality of support members, and each of the floating plates is connected to the floating platform via the plurality of support members.

In a preferred technical solution of the above floating joining device, each of the floating plates is further provided with a plurality of restoring members, and the restoring member is connected to the floating plate for adjusting the position of the floating plate.

In a preferred technical solution of the above floating joining device, the restoring member comprises a spring, the spring is provided between the base and the floating plate, and the spring is configured to enable the floating plate to return to a position determined by a pre-tensioning force of the spring.

In a preferred technical solution of the above floating joining device, the floating platform is provided with at least one locking/unlocking mechanism, and the locking/unlocking mechanism is configured to be able to lock/unlock the traction battery after the first positioning mechanism is joined to the vehicle body of the vehicle to be serviced or the second positioning mechanism is joined to the traction battery of the vehicle to be serviced.

The invention also provides a battery swap robot, which comprises a body provided with a walking device and a floating joining device, wherein the floating joining device is the floating joining device according to any one of the above solutions.

The invention also provides an unlocking method of the floating joining device, the floating joining device comprising a locking/unlocking mechanism, and the unlocking method comprising the steps of:
when the first positioning mechanism is not joined to the vehicle body of the vehicle to be serviced, joining the second positioning mechanism to the traction battery; and
after the joining of the second positioning mechanism to the traction battery is completed, causing the locking/unlocking mechanism to unlock the traction battery.

The invention also provides a locking method of the floating joining device, the floating joining device comprising a locking/unlocking mechanism, and the locking method comprising the steps of:
joining the first positioning mechanism to the vehicle body of the vehicle to be serviced; and
after the joining of the first positioning mechanism to the vehicle body of the vehicle to be serviced is completed, causing the locking/unlocking mechanism to lock the traction battery joined to the second positioning mechanism onto the vehicle to be serviced.

The invention also provides a locking/unlocking method of the floating joining device, the floating joining device comprising a locking/unlocking mechanism, and the locking/unlocking method comprising the steps of:
joining the second positioning mechanism to the used traction battery;
after the joining of the second positioning mechanism to the used traction battery is completed, causing the locking/unlocking mechanism to unlock the used traction battery;
joining the second positioning mechanism to a fresh traction battery;
joining the first positioning mechanism to the vehicle body of the vehicle to be serviced; and
after the joining of the first positioning mechanism to the vehicle body of the vehicle to be serviced is completed, causing the locking/unlocking mechanism to lock the fresh traction battery onto the vehicle to be serviced.

Those skilled in the art can understand that in the preferred technical solutions of the invention, the floating joining device comprises a base and a floating portion, the floating portion being configured to be floatable relative to the base, and the floating portion being provided with at least one first positioning mechanism and at least one second positioning mechanism, wherein the first positioning mechanism is configured to be able to achieve joining with a vehicle body (such as a chassis) of a vehicle to be serviced by means of floating of the floating portion, and the second positioning mechanism is configured to be able to achieve joining with a traction battery of the vehicle to be serviced by means of floating of the floating portion. The floating portion comprises at least one floating plate and a floating platform connected to the at least one floating plate, and the at least one first positioning mechanism and the at least one second positioning mechanism are both arranged on the floating platform. By arranging at least one first positioning mechanism and at least one second positioning mechanism on the floating platform, when a used traction battery is to be unloaded, the second positioning mechanism can finish the joining to the used traction battery on the vehicle to be serviced by means of floating of the floating platform, so that the battery swap robot can successfully unload the used traction battery; and when a fresh traction battery is to be loaded, the fresh traction battery can be fixed in position on the floating platform through joining to the second positioning mechanism, and the first positioning mechanism can achieve joining to the vehicle body of the vehicle to be serviced by means of floating of the floating platform, thereby determining the loading position of the fresh traction battery. As the first positioning mechanism and the second positioning mechanism are both arranged on the floating platform and the relative positions of the first positioning mechanism and the second positioning mechanism are fixed, the loading position determined by such a positioning method is also fixed. In other words, through the floating portion and the arrangement of the first positioning mechanism and the second positioning mechanism on the floating portion, the floating joining device of the invention has high positioning precision and good operation stability, solves the problems of low precision and poor stability in battery swapping of current battery swap robots, and greatly improves the user experience during battery swapping.

### Brief Description of the Drawings

The floating joining device, battery swap robot, and locking, unlocking, and locking/unlocking methods of the invention will be described hereinafter with reference to the accompanying drawings and in conjunction with a battery charging and swapping station with a rail-guided battery swap robot. In the accompanying drawings:
Fig. 1 is a schematic structure diagram of a floating joining device of the invention;
Fig. 2 is a schematic front view of the floating joining device of the invention;
Fig. 3 is a schematic structure diagram of the floating joining device of the invention with a floating platform removed;
Fig. 4 is a schematic structure diagram of a first positioning mechanism of the floating joining device of the invention;
Fig. 5 is a partial enlarged view of part A in Fig. 2;
Fig. 6 is a sectional view taken along line B-B of Fig. 3;
Fig. 7 is a partial enlarged view of part C in Fig. 3;
Fig. 8 is a schematic structure diagram of a rail-guided battery swap robot of the invention; and
Fig. 9 is a flowchart of a locking/unlocking method of the floating joining device of the invention.

### List of reference signs

1. Floating joining device; 11. base; 111. cylindrical bracket; 112. L-shaped bracket; 12. floating portion; 121. floating platform; 122. floating plate; 123. first positioning mechanism; 1231. driving unit; 1232. positioning unit; 1233. guide rod; 124. second positioning mechanism; 125. locking/unlocking mechanism; 126. support member; 127. first limiting member; 128. second limiting member; 129. restoring member; 1291. spring; 1292. fastening screw; 2. body; 3. walking device; 4. battery transfer device; 41. powered roller set; and 42. unpowered roller set.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although two first positioning mechanisms are provided on a floating platform, such a numerical relationship is not fixed, those skilled in the art can make amendments according to requirements so as to adapt to specific application scenarios.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For those skilled in the art, the specific meaning of the above terms in the invention can be interpreted according to the specific situation.

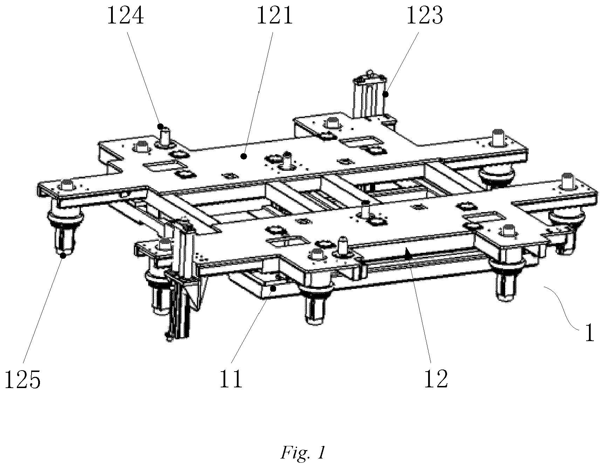

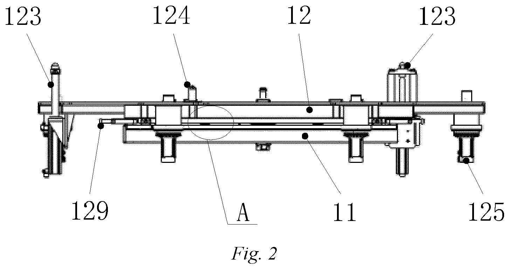

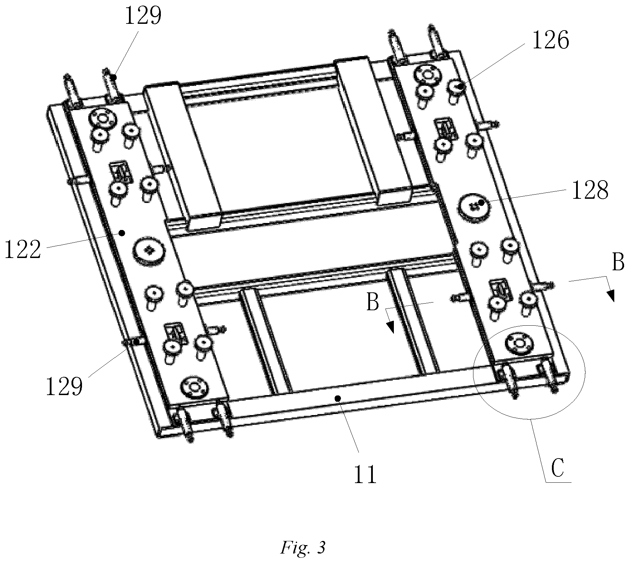

Firstly, referring to Fig. 1, Fig. 2 and Fig. 3, wherein Fig. 1 is a schematic structure diagram of a floating joining device of the invention; Fig. 2 is a schematic front view of the floating joining device of the invention; and Fig. 3 is a schematic structure diagram of the floating joining device of the invention with a floating platform removed.

As shown in Figs. 1 to 3, in order to solve the problems of low precision and poor stability in battery swapping of current battery swap robots in the prior art, a floating joining device 1 of the invention mainly comprises a base 11 and a floating portion 12. The floating portion 12 is configured to float within a certain extent relative to the base 11, and comprises at least one floating plate 122 and a floating platform 121 connected to the at least one floating plate 122. The floating plate 122 is fixedly connected to the floating platform 121. The floating platform 121 is provided with at least one first positioning mechanism 123, at least one second positioning mechanism 124 and a locking/unlocking mechanism 125. The first positioning mechanism 123 is configured to be able to achieve joining with a vehicle body (such as a chassis) of a vehicle to be serviced by means of floating of the floating portion 12. The second positioning mechanism 124 is configured to be able to join with a fresh traction battery from a battery compartment of a battery charging and swapping station, or join with a used traction battery on the vehicle to be serviced by means of floating of the floating portion 12. The locking/unlocking mechanism 125 is configured to be able to unlock the used traction battery after the second positioning mechanism 124 is joined to the used traction battery, or lock the fresh traction battery after the first positioning mechanism 123 is joined to the vehicle body of the vehicle to be serviced.

According to the above-mentioned arrangement, when the used traction battery is to be unloaded, the second positioning mechanism 124 located on the floating portion 12 is joined to the used traction battery on the vehicle to be serviced by means of floating of the floating portion 12, and after the joining is done, the locking/unlocking mechanism 125 unlocks the used traction battery, and then the used traction battery is removed. In the subsequent loading of the fresh traction battery, the fresh traction battery can be fixed on the floating platform 121 through joining to the second positioning mechanism 124, and the first positioning mechanism 123 can achieve joining to the chassis of the vehicle to be serviced by means of floating of the floating platform 121, thereby determining a precise loading position of the fresh traction battery on the chassis of the vehicle to be serviced. At this time, the locking/unlocking mechanism 125 completes the loading of the fresh traction battery by locking the fresh traction battery.

As can be seen from the above description, by arranging the first positioning mechanism 123 configured to be joined to the vehicle body and the second positioning mechanism 124 configured to be joined to the traction battery on the battery swap platform, the invention can accurately determine the unloading position and the loading position of the battery when unloading the used traction battery and loading the fresh traction battery, respectively, thereby improving the positioning precision and the operation stability of the floating joining device 1, solving the problems of low precision and poor stability in battery swapping of current battery swap robots, and greatly improving the user experience during battery swapping.

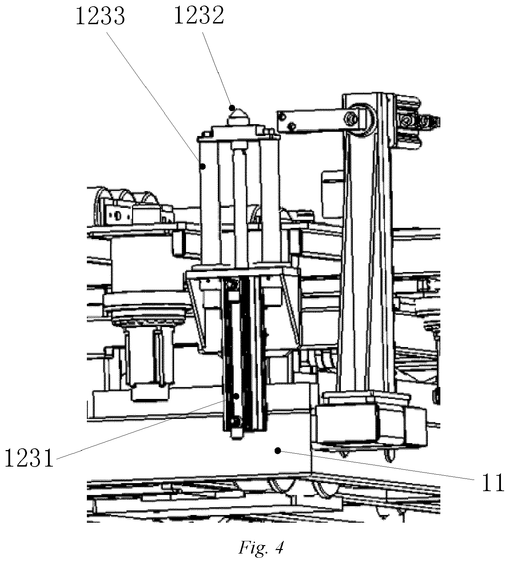

Next, the principle of the invention will be described in detail with reference to Figs. 1, 3 and 4, wherein Fig. 4 is a schematic structure diagram of a first positioning mechanism of the floating joining device of the invention. As shown in Figs. 1, 3 and 4, the floating portion 12 comprises a floating platform 121 and a plurality of floating plates 122, and the floating platform 121 is fixedly connected to each floating plate 122 via a plurality of support members 126. A plurality of first positioning mechanisms 123, a plurality of second positioning mechanisms 124 and a plurality of locking/unlocking mechanisms 125 are fixedly connected to the floating platform 121. Referring to Fig. 3, in a possible embodiment, the floating portion 12 comprises two floating plates 122, and each of the floating plates 122 is screwed to the floating platform 121 by eight columnar support members 126 (e.g., the support members 126 are connected to the floating platform 121 and the floating plate 122, respectively, by screws). Referring to Figs. 1 and 4, the floating platform 121 is provided with two first positioning mechanisms 123, two second positioning mechanisms 124 and ten locking/unlocking mechanisms 125. The first positioning mechanism 123 further comprises a driving unit 1231 and a positioning unit 1232. The driving unit 1231 is preferably a lead-screw stepper motor, which is internally provided with a rotor having an internal thread and externally provided with a screw rod mated with the rotor. The positioning unit 1232 is preferably a metal positioning pin head (a joining pin hole is correspondingly provided in the chassis of the vehicle to be serviced), which is mounted at a top end of the screw rod, and two guide rods 1233 are connected to two sides of the positioning pin head to ensure the moving precision and moving stability of the screw rod. The second positioning mechanism 124 is preferably a second positioning pin, such as a cylindrical metal positioning pin with a chamfered top portion (the traction battery is correspondingly provided with a positioning pin hole), which is fixedly connected to the floating platform 121. The locking/unlocking mechanism 125 comprises a servo motor and a locking/unlocking head (such as an internal hex head) provided on an output shaft of the servo motor.

The above arrangement has the following advantages. When a used traction battery is to be unloaded, two cylindrical metal positioning pins with chamfers provided on the floating platform 121 can be joined to the positioning pin holes arranged in the used traction battery to determine the locking/unlocking position by means of floating of the floating platform 121, so that the locking/unlocking device can smoothly unload the used traction battery, and the unloading stability of the floating joining device 1 is ensured. When a fresh traction battery is to be loaded, the fresh traction battery can be joined to the cylindrical metal positioning pin via the positioning pin holes to realize the positioning on the floating platform 121. Then, the two lead-screw stepper motors drive the screw rods and the metal positioning pin heads on the screw rods through the rotation of the rotors to join with the two joining pin holes of the chassis of the vehicle to be serviced via floating of the floating platform 121, and thus the loading position of the fresh traction battery on the chassis of the vehicle can be determined, so that the locking/unlocking device can smoothly complete the loading of the fresh traction battery, and the positioning and loading precision of the floating joining device 1 is improved.

Obviously, the above arrangement is not exclusive, and those skilled in the art can rationally adjust it as long as the adjustment enables the floating joining device 11 to smoothly achieve joining with the vehicle body of the vehicle to be serviced and the traction battery, and the conditions for locking/unlocking the traction battery are met. For example, the number of the floating plates 122 may be set as one or four alternatively; the number of the locking/unlocking mechanisms 125 is four or eight, the driving device thereof is an air cylinder or a lead-screw stepper motor, and the locking/unlocking head is an external hex head; the driving unit 1231 may alternatively be an air cylinder or an electric cylinder; the positioning unit 1232 may alternatively be a positioning hole (accordingly, the chassis of the vehicle is provided with the positioning pin head); the second positioning unit 1232 may alternatively be a conical/rectangular positioning pin; and the floating platform 121 and the floating plate 122 are welded to or integrally formed with each other.

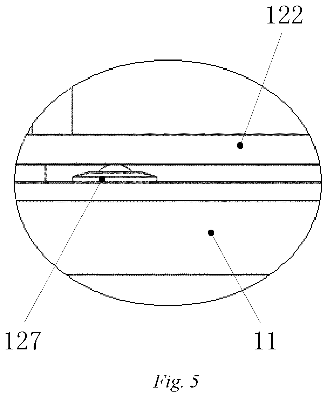

Hereinafter, reference is made to Figs. 2, 3 and 5, in which Fig. 5 is a partial enlarged view of position A in Fig. 2. As shown in Figs. 2, 3 and 5, a plurality of first limiting members 127 and at least one second limiting member 128 are provided between each floating plate 122 of the two floating plates 122 and the base 11 to realize floating, wherein the first limiting member 127 is configured to allow the floating plate 122 to float in a horizontal plane, and the second limiting member 128 is arranged such that the floating plate 122 is unable to move relative to the base 11 in a vertical direction. In combination with Figs. 3 and 5, preferably, the first limiting member 127 is a bullseye bearing, and a pedestal thereof is fixedly connected to the base 11, a ball faces the floating plate 122, and a bottom face of the floating plate 122 abuts against the bullseye bearing. The second limiting member 128 is a plate bolt, the floating plate 122 is provided with a limiting hole (not shown in the figures, i.e., the aperture of the limiting hole is greater than the diameter of a stud, so that the floating plate 122 can freely float) capable of accommodating a stud of the bolt, the stud is screwed to the base 11 through the limiting hole, and after screwing, a lower side of a nut abuts against a top face of the floating plate 122.

It would have been understood by those skilled in the art that the specific forms, the arrangement positions and the numbers of the first limiting member 127 and the second limiting member 128 are not inalterable, and could be adjusted in any form by those skilled in the art when the above limiting conditions are met, so as to adapt to more specific application scenarios. For example, the first limiting member 127 may also be a member, such as a universal wheel, by which the floating plate 122 can float freely, and the base of the first limiting member 127 may also be fixedly connected to the floating plate 122. the second limiting member 128 can also be a member, such as a rivet, by which the floating plate 122 is unable to move relative to the base 11 in the vertical direction, and can also be an L-shaped steel arranged around the floating plate 122, a vertical portion of the L-shaped steel is fixedly connected to the base 11, and a lateral portion of the L-shaped steel faces the floating plate 122 and abuts against the top face of the floating plate 122 to limit the movement of the floating plate 122 in the vertical direction.

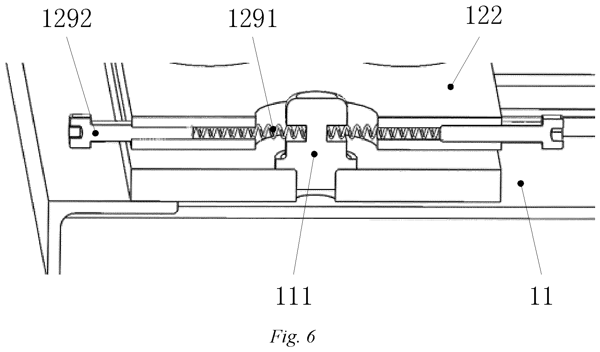

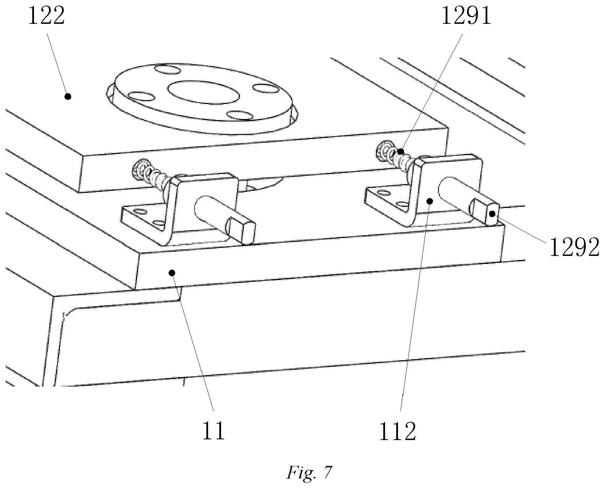

Next, referring to Fig. 3, Fig. 6 and Fig. 7, wherein Fig. 6 is a sectional view taken along line B-B of Fig. 3; and Fig. 7 is a partial enlarged view of Fig. 3 at section C. As shown in Fig. 3, Fig. 6 and Fig. 7, in order to realize automatic restoring of the floating joining device 1 after floating, in a possible embodiment, each floating plate 122 is further provided with a plurality of restoring members 129 for self-return of the floating plate 122 after floating. Preferably, the restoring member 129 comprises a spring 1291 and a fastening screw 1292, the spring 1291 is provided between the base 11 and the floating plate 122, and the fastening screw 1292 is used to adjust a pre-tensioning force of the spring 1291. In combination with Fig. 3, each floating plate 122 is provided with eight restoring members 129, and two on each side face. In combination with Fig. 6 and Fig. 7, a connecting hole or a counterbore is provided on a side face of the floating plate 122, and a cylindrical bracket 111 and an L-shaped bracket 112 are respectively provided on the base 11 corresponding to the connecting hole and the counterbore. One end of the spring 1291 of part of the restoring members 129 extends into the cylindrical bracket 111 through the connecting hole, and the other end thereof is fastened in the connecting hole through the fastening screw 1292; and one end of the spring 1291 of the other part of the restoring members 129 extends into the counterbore, and the other end thereof is connected to the L-shaped bracket 112 via the fastening screw 1292. In this way, when the first positioning mechanism 123 completes the insertion into an engaging member (e.g., the engaging member is a positioning hole in the chassis of the vehicle to be serviced) by means of floating of the floating plate 122, each spring 1291 may generate an elastic force, and after the insertion connection is canceled, the floating plate 122 realizes automatic restoring under the action of the elastic force, i.e. the floating plate 122 returns to the position determined by the pre-tensioning force of the spring 1291.

Of course, the arrangement form and the number of the restoring member 129 described above is only a more specific embodiment. In addition, any structure capable of restoring the floating plate 122 should fall within the scope of protection of the invention.

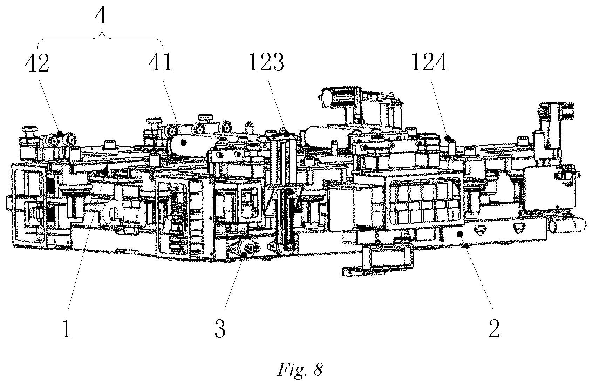

Next, referring to Fig. 8, Fig. 8 is a schematic structure diagram of a rail-guided battery swap robot of the invention. As shown in Fig. 8, the invention further provides a rail-guided battery swap robot (hereinafter referred to as the battery swap robot), the rail-guided battery swap robot mainly comprising a body 2, a walking device 3 provided on the body 2, a floating joining device 1 and a battery transfer device 4. The walking device 3 is a wheel that can roll on a set rail, and the battery transfer device 4 comprises a powered roller set 41 and an unpowered roller set 4241, which is used for transferring the traction battery between the battery swap robot and a battery rack within a battery charging and swapping station. The floating joining device 1 is the floating joining device 1 described above in this embodiment and is fixed to the body 2 of the robot via a lifting mechanism. For example, the lifting mechanism is a scissor lift, and the base 11 of the floating joining device 1 is fixed to the scissor lift. The scissor lift can drive the floating joining device 1 to ascend and descend, and then the first positioning mechanism 123 and the second positioning mechanism 124 located on the floating platform 121 complete the insertion with the positioning pin hole of the traction battery and the joining hole in the chassis of the vehicle to be serviced, respectively, via floating of the floating plate 122 relative to the base 11, finally realizing the unloading of the used traction battery and the loading of the fresh traction battery.

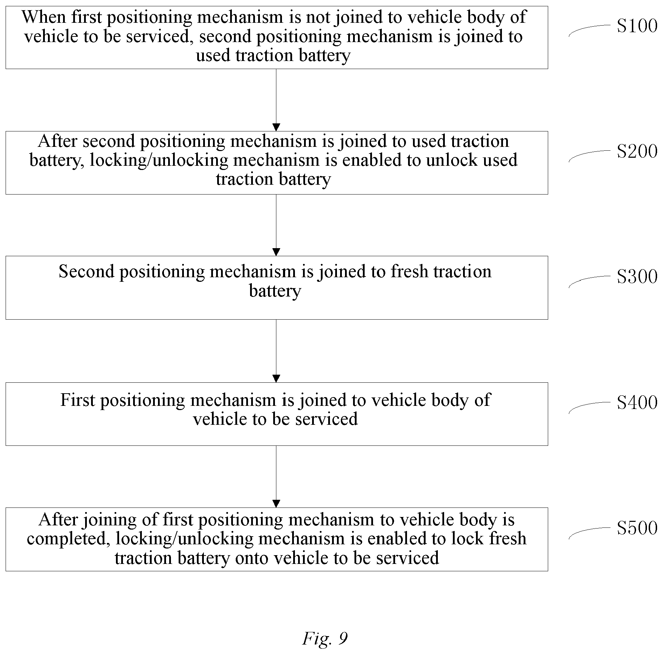

Hereinafter, referring to Fig. 9, Fig. 9 is a flowchart of a locking/unlocking method of the floating joining device 1 of the invention. As shown in Fig. 9, the invention also provides a locking/unlocking method of the floating joining device 11, which mainly comprises the following steps:

S100: when the first positioning mechanism 123 is not joined to the vehicle body of the vehicle to be serviced, the second positioning mechanism 124 is joined to the used traction battery, for example, via the cylindrical metal positioning pin inserted into and mated with the positioning pin hole of the used traction battery, and after the insertion is done, the joining of the locking/unlocking mechanism 125 and fastening bolts on the traction battery is also done;

S200: after the second positioning mechanism 124 is joined to the used traction battery, the locking/unlocking mechanism 125 is enabled to unlock the used traction battery, for example, the locking/unlocking mechanism 125 directly unlocks the traction battery;

S300: the second positioning mechanism 124 is joined to the fresh traction battery, for example, after replacing the used traction battery with the fresh traction battery, the floating joining device 1 is mated with the fresh traction battery via insertion of the cylindrical metal positioning pin to complete the fixation of the fresh traction battery onto the floating joining device 1;

S400: the first positioning mechanism 123 is joined to the vehicle body of the vehicle to be serviced, for example, the metal positioning pin head is inserted into the positioning pin hole in the chassis of the vehicle to be serviced by jacking the metal positioning pin head with the lead-screw stepper motor, and after the insertion is done, the fresh traction battery is in a position where it can be directly locked; and

S500: after the joining of the first positioning mechanism 123 to the vehicle body of the vehicle to be serviced is completed, the locking/unlocking mechanism 125 is enabled to lock the fresh traction battery onto the vehicle to be serviced, for example, after the joining is completed, the locking/unlocking mechanism 125 directly locks the fastening bolts, thereby completing the loading of the fresh traction battery onto the vehicle body.

It can be seen from the above method that when a used traction battery is to be unloaded, it is only necessary to connect the second positioning mechanism 124 to the traction battery by insertion in order to unlock the used traction battery; and when a fresh traction battery is to be loaded, the fresh traction battery is first positioned relative to the floating joining device 1 via the second positioning mechanism 124, and then the floating joining device 1 is positioned by insertion relative to the chassis of the vehicle to be serviced via the first positioning mechanism 123, thereby indirectly completing the positioning of the fresh traction battery relative to the chassis of the vehicle, overcoming the problems of low precision and poor stability in battery swapping of current battery swap robots in the prior art, improving the positioning precision and battery swapping stability of the floating joining device 1, and enhancing the user experience during battery swapping.

Referring to Fig. 9 and in combination with Fig. 8, as a possible embodiment, a battery swap process of the battery swap robot applying the floating joining device 1 of the invention can be as follows:

a vehicle to be serviced reaches a parking platform of a battery charging and swapping station, and completes coarse positioning and lifting on the parking platform → a battery swap robot reaches a projection position of the vehicle to be serviced, and completes precise positioning relative to the vehicle to be serviced in the vertical direction → a scissor lift lifts the floating joining device 1 such that the cylindrical metal positioning pin can be inserted into and mated with the positioning pin hole of a used traction battery by means of floating of the floating platform 121 relative to the base 11 → after the insertion is completed, the locking/unlocking mechanism 125 unlocks the used traction battery, and the traction battery falls onto the floating platform 121 → the scissor lift lowers the floating joining device 1 to complete the unloading of the used traction battery → the battery swap robot leaves the battery swap position to reach a battery rack, the scissor lift continues to lower the floating joining device 1 such that the used traction battery falls onto the battery transfer device 4, and the used traction battery is replaced with a fresh traction battery under the drive of the powered roller set 41 and the guidance of the unpowered roller group 4241 of the battery transfer device 4 → the scissor lift jacks up the floating joining device 1, and the cylindrical metal positioning pin is inserted into the positioning pin hole of the fresh traction battery for positioning →the battery swap robot reaches the projection position of the vehicle to be serviced again, and completes the precise positioning with the vehicle to be serviced→ the scissor lift continues to jacks up the floating joining device 1 while the lead-screw stepper motor raises the metal positioning pin head, such that the metal positioning pin head is inserted into and mated with the joining pin hole in the chassis of the vehicle to be serviced via floating of the floating platform 121 → after the insertion is done, the fresh traction battery is already in a locking/unlocking position, and the locking/unlocking mechanism 125 directly locks the fresh traction battery →the scissor lift lowers the floating joining device 1, and the floating plate 122 is automatically restored under an elastic force of the restoring member 129 → the battery swap robot returns to an initial position, and the battery swapping is completed.

Finally, it should be noted that although this embodiment is described in conjunction with a rail-guided battery swap robot, obviously, the invention can also be applied to other apparatus with the floating joining device 1, such as an automatically guided battery swap robot.

Heretofore, the technical solutions of the invention have been described with reference to the preferred embodiments shown in the accompanying drawings; however, those skilled in the art can readily understand that the scope of protection of the invention is obviously not limited to these particular embodiments. Without departing from the principle of the invention, a person skilled in the art may make equivalent changes or substitutions on related technical features, and the technical solutions after these changes or substitutions fall into the scope of protection of the invention.

## Claims

1. A floating joining device, **characterized by** comprising a base and a floating portion, the floating portion being configured to be floatable relative to the base, and the floating portion being provided with at least one first positioning mechanism and at least one second positioning mechanism, wherein the first positioning mechanism is configured to be able to achieve joining with a vehicle body of a vehicle to be serviced by means of floating of the floating portion, and the second positioning mechanism is configured to be able to achieve joining with a traction battery of the vehicle to be serviced by means of floating of the floating portion.

2. The floating joining device according to claim 1, **characterized in that** the floating portion comprises at least one floating plate and a floating platform connected to the at least one floating plate, and the at least one first positioning mechanism and the at least one second positioning mechanism are both arranged on the floating platform.

3. The floating joining device according to claim 2, **characterized in that** the first positioning mechanism comprises a driving unit and a positioning unit, and the driving unit is configured to be able to drive the positioning unit to move.

4. The floating joining device according to claim 3, **characterized in that** the driving unit is an electric cylinder, an air cylinder or a lead-screw stepper motor; and/or the positioning unit is a first positioning pin.

5. The floating joining device according to claim 3, **characterized in that** the second positioning mechanism is a second positioning pin which is fixedly connected to the floating platform.

6. The floating joining device according to claim 5, **characterized in that** the floating portion comprises a plurality of floating plates, and each of the floating plates is provided with a plurality of first limiting members configured to allow the floating plate to float in a horizontal plane.

7. The floating joining device according to claim 6, **characterized in that** the first limiting member is a bullseye bearing provided at the base, and the floating plate abuts against the bullseye bearing.

8. The floating joining device according to claim 6, **characterized in that** each of the floating plates is further provided with at least one second limiting member, and the second limiting member is configured such that the floating plate is unable to move relative to the base in a vertical direction.

9. The floating joining device according to claim 8, **characterized in that** each of the floating plates is provided with a plurality of support members, and each of the floating plates is connected to the floating platform via the plurality of support members.

10. The floating joining device according to claim 9, **characterized in that** each of the floating plates is further provided with a plurality of restoring members, and the restoring member is connected to the floating plate for adjusting the position of the floating plate.

11. The floating joining device according to claim 10, **characterized in that** the restoring member comprises a spring, the spring is provided between the base and the floating plate, and the spring is configured to enable the floating plate to return to a position determined by a pre-tensioning force of the spring.

12. The floating joining device according to any one of claims 1 to 11, **characterized in that** the floating platform is provided with at least one locking/unlocking mechanism, and the locking/unlocking mechanism is configured to be able to lock/unlock the traction battery after the first positioning mechanism is joined to the vehicle body of the vehicle to be serviced or the second positioning mechanism is joined to the traction battery of the vehicle to be serviced.

13. A battery swap robot, which comprises a body provided with a walking device and a floating joining device, **characterized in that** the floating joining device is the floating joining device according to any one of claims 1 to 12.

14. An unlocking method of the floating joining device according to claim 12, **characterized by** comprising the steps of:
when the first positioning mechanism is not joined to the vehicle body of the vehicle to be serviced, joining the second positioning mechanism to the traction battery; and
after the joining of the second positioning mechanism to the traction battery is completed, causing the locking/unlocking mechanism to unlock the traction battery.

15. A locking method of the floating joining device according to claim 12, **characterized by** comprising the steps of:
joining the first positioning mechanism to the vehicle body of the vehicle to be serviced; and
after the joining of the first positioning mechanism to the vehicle body of the vehicle to be serviced is completed, causing the locking/unlocking mechanism to lock the traction battery joined to the second positioning mechanism onto the vehicle to be serviced.

16. A locking/unlocking method of the floating joining device according to claim 12, **characterized by** comprising the steps of:
joining the second positioning mechanism to the used traction battery;
after the joining of the second positioning mechanism to the used traction battery is completed, causing the locking/unlocking mechanism to unlock the used traction battery;
joining the second positioning mechanism to a fresh traction battery;
joining the first positioning mechanism to the vehicle body of the vehicle to be serviced; and
after the joining of the first positioning mechanism to the vehicle body of the vehicle to be serviced is completed, causing the locking/unlocking mechanism to lock the fresh traction battery onto the vehicle to be serviced.
